# EUROPÄISCHE PATENTSCHRIFT

(11) **EP 4 417 552 B1**
(45) Veröffentlichungstag und Bekanntmachung des Hinweises auf die Patenterteilung: **28.01.2026**
(21) Anmeldenummer: 24158032.3
(22) Anmeldetag: 16.02.2024
(51) Int. Cl.: B65G 47/28, B65G 47/84

(54) **VORRICHTUNG ZUM TRANSPORTIEREN VON BEHÄLTERN MIT TEILUNGSANPASSUNG**
DEVICE FOR TRANSPORTING CONTAINERS WITH PARTITION ADJUSTMENT
DISPOSITIF DE TRANSPORT DE RÉCIPIENTS À RÉGLAGE DE DIVISION

(30) Priorität: 16.02.2023 DE 102023103858
(43) Veröffentlichungstag der Anmeldung: 21.08.2024
(73) Patentinhaber: KRONES AG, 93073 Neutraubling (DE)
(72) Erfinder: Landler, Bruno, 93073 Neutraubling (DE); Schoenfelder, Markus, 93073 Neutraubling (DE)
(74) Vertreter: Nordmeyer, Philipp Werner

(56) Entgegenhaltungen:
- EP-B1- 1 232 969
- WO-A1-2019/048549
- WO-A1-2019/057304
- CH-A5- 690 006
- JP-U- H08 915
- JP-Y2- 2 556 325

## Beschreibung

### Technisches Gebiet

Die vorliegende Erfindung betrifft eine Vorrichtung zum Transportieren von Behältern entlang eines Transportwegs, vorzugsweise in einer Getränkeabfüllanlage, sowie eine Vorrichtung zum Transportieren und Behandeln von Behältern, insbesondere zum Befüllen der Behälter mit einem Füllprodukt und Verschließen der Behälter mit je einem Verschluss.

### Stand der Technik

Auf dem Gebiet der Getränkeabfüllanlagen ist es bekannt, Behälter in einem Füller mit einem Füllprodukt zu befüllen und anschließend mittels einer Übergabevorrichtung an einen Verschließer, der auf die Behälter jeweils einen Verschluss appliziert, zu übergeben. Als Füller und Verschließer kommen hierbei zumeist Vorrichtungen in Rundläuferbauweise zum Einsatz, bei denen die Behälter mittels eines Karussells während der Behandlung entlang einer kreisförmigen Trajektorie transportiert werden.

Der Zu- und Abtransport an beziehungsweise von einem Rundläufer kann über Transportsterne, welche die Behälter ebenfalls auf einer Kreisbahn transportieren, oder eine lineare Transfereinrichtung, umfassend etwa Transportbänder, Transportketten usw., erfolgen. Eine lineare Transfereinrichtung, umfassend ein bandähnliches Transportorgan mit Halteklammern zum Halten der zu transportierenden Behälter, geht aus der DE 10 2020 131 105 A1 hervor.

Beim Transport der Behälter von einer Station zur nächsten, beispielsweise bei der Übergabe vom Füller zum Verschließer, kann es vorkommen, dass sich die Teilung der Behälter, d.h. der Abstand zwischen benachbarten Behältern, ändert. Dies kann bei der Übergabe der Behälter, beispielsweise in eine Transportkette hinein und aus einer solchen heraus, zum Überschwappen oder einer Beschädigung der Behälter führen.

Um die Kompatibilität zwischen den einzelnen Stationen herzustellen oder zu verbessern, sind Teilungswandler bekannt, die eingerichtet sind, um die Teilung der Behälter beim Transport zwischen Stationen mit unterschiedlicher Teilung zu ändern. Ein Teilungswandler in Rundläuferbauweise mit übereinander angeordneten Übergabesternen geht aus der DE 20 2004 006 716 U1 hervor. Ein Teilungswandler auf der Grundlage einer Scherenkette mit mehreren Aufnahmeelementen zum Aufnehmen und Mitführen der Behälter ist aus der WO 2019/057304 A1 bekannt.

Die CH 690006 A5 betrifft eine Transportvorrichtung bestehend aus einer Gelenk-Gliederkette, bei der an jedem zweiten Gelenkglied ein Mitnehmer befestigt ist. Die Gelenkglieder, an denen die Mitnehmer befestigt sind, sind in einer ersten Führungsschiene verschiebbar geführt. Im Bereich der zwischen den Gelenkgliedern mit den Mitnehmern liegenden Gelenkgliedern sind Arme an den Kettengliedern befestigt, an denen eine Auslenkrolle angeordnet ist, die in einer zweiten Führungsschiene geführt ist. Der Abstand der zweiten Führungsschiene zur ersten Führungsschiene nimmt im Übergabebereich zu, um den Abstand zwischen Mitnehmern vorübergehend zu verringern. Die an der Gliederkette befestigten Arme ermöglichen ein torsionsfreies exaktes Auslenken der Kettenglieder im Übergabebereich.

Teilungswandler sind in der Regel mechanisch aufwändiger als entsprechende Transportsysteme mit konstanter Teilung. Dies kann zu einer Verschlechterung der Laufruhe führen sowie die Störungsanfälligkeit und damit den Wartungsaufwand erhöhen. In der Bereitstellung einer robusten, störungsarmen Mechanik in Verbindung mit einer erhöhten Laufruhe, um Überschwappen und Beschädigungen am Behälter zu vermeiden, liegt eine maschinenbauliche Herausforderung.

### Darstellung der Erfindung

Eine Aufgabe der vorliegenden Erfindung besteht darin, eine verbesserte Vorrichtung zum Transportieren von Behältern entlang eines Transportwegs, vorzugsweise in einer Getränkeabfüllanlage, sowie eine verbesserte Vorrichtung zum Transportieren und Behandeln von Behältern bereitzustellen, insbesondere die Zuverlässigkeit und/oder Laufruhe einer solchen Vorrichtung zu erhöhen.

Die Aufgabe wird durch eine Vorrichtung zum Transportieren von Behältern mit den Merkmalen des Anspruchs 1 sowie eine Vorrichtung zum Transportieren und Behandeln von Behältern mit den Merkmalen des Anspruchs 10 gelöst. Vorteilhafte Weiterbildungen folgen aus den Unteransprüchen, der folgenden Darstellung der Erfindung sowie der Beschreibung bevorzugter Ausführungsbeispiele.

Die Vorrichtung gemäß der Erfindung, hierin auch als "Transportvorrichtung" bezeichnet, dient zum Transport von Behältern entlang eines Transportwegs, insbesondere um die Behälter von einer Station, vorzugsweise einer Füllvorrichtung, an eine andere Station, vorzugsweise eine Verschließvorrichtung, zu übergeben. Der Transportweg ist vorzugsweise im Wesentlichen linear. Die Transportvorrichtung kommt vorzugsweise in Verbindung mit einem oder mehreren Rundläufern zur Anwendung. In anderen Worten, die Behälter werden vorzugsweise von einer Vorrichtung beziehungsweise Station mit gekrümmter, vorzugsweise kreisförmiger, Transporttrajektorie an die Transportvorrichtung übergeben; alternativ oder zusätzlich werden die Behälter von der Transportvorrichtung an eine Vorrichtung beziehungsweise Station mit gekrümmter, vorzugsweise kreisförmiger, Transporttrajektorie übergeben.

Die Transportvorrichtung gemäß der Erfindung kommt besonders bevorzugt in einer Getränkeabfüllanlage zur Anwendung, so etwa zum Abfüllen von Wasser (still oder karbonisiert), Softdrinks, Bier, Wein, Saft, Smoothies, Milchprodukten, Mixgetränken und dergleichen.

Die Transportvorrichtung weist eine Basiskette mit mehreren Kettengliedern auf, die entlang des Transportwegs aneinandergereiht und über Kettengelenke entsprechend schwenkbar miteinander verbunden sind. Die Kettenglieder sind gemäß der Erfindung zumindest teilweise in Richtung des Transportwegs relativ zueinander verschiebbar, so dass der Abstand zwischen benachbarten Kettengliedern beziehungsweise Kettengelenken zumindest teilweise veränderbar ist.

Die Transportvorrichtung weist mehrere Behältermitnehmer auf, die an zumindest einigen der Kettenglieder vorgesehen und eingerichtet sind, um jeweils einen Behälter aufzunehmen und entlang des Transportwegs mitzuführen.

Die Transportvorrichtung weist ferner eine Kettenlaufkurve, die zur Führung der Basiskette entlang des Transportwegs eingerichtet ist, und einen Kniehebelmechanismus auf, der an die Basiskette angebunden und eingerichtet ist, um in Zusammenwirkung mit der Kettenlaufkurve die Verschiebung der Kettenglieder relativ zueinander zu bewirken.

Als "Teilung" sei der Abstand zwischen benachbarten, im Transport begriffenen Behältern bezeichnet. Die Transportvorrichtung gemäß der Erfindung ist imstande, den Abstand zwischen benachbarten Behältern während des Transports entlang des Transportwegs zu verändern, und fungiert somit als Teilungswandler.

Die Transportvorrichtung ist durch die Bereitstellung und Beschaffenheit der Basiskette, die eine stabile, ruhiglaufende Basis für den Kniehebelmechanismus bildet, maschinenbaulich robust. Haltbarkeit, Beständigkeit und Zuverlässigkeit sind verbessert. Dies gilt gleichermaßen für die Hygiene und Reinigungsfähigkeit, die insbesondere im Bereich der Lebensmittelverarbeitung unabdingbar sind.

Vorzugsweise weist die Basiskette Transportrollen oder Gleitflächen auf, die eingerichtet sind, um an der Kettenlaufkurve abzurollen oder zu gleiten und so die Basiskette entlang des Transportwegs zu führen. Auf diese Weise wird zum einen die Laufruhe der Kette weiter verbessert, zum anderen neigt der Kniehebelmechanismus durch die Stabilisierung der Basiskette nicht zum Verhaken oder Verkanten. Die Kettengelenke beziehungsweise deren Achsen können synergetisch als Achsen für die Transportrollen fungieren.

Vorzugsweise wird die relative Verschiebbarkeit der Kettenglieder der Basiskette dadurch erreicht, dass die Kettenglieder zumindest teilweise je ein Langloch aufweisen, in dem ein entsprechendes Kettengelenk zur gelenkigen Verbindung mit einem benachbarten Kettenglied verschiebbar gelagert ist. Die mit einem Langloch ausgestatteten Kettenglieder fungieren als Zughebel für die Entlastung der Kette. Die Langlöcher verhindern, dass die Kette "glattgezogen" wird. In anderen Worten, die Gesamtkette, umfassend die Basiskette und den Kniehebelmechanismus, stabilisiert sich durch die Basiskette als umlaufende Basis selbst.

Für eine konkrete, maschinenbaulich einfache und robuste Umsetzung dieses Konzepts weist die Basiskette vorzugsweise zwei Arten von Kettengliedern auf, nämlich Zugentlastungsglieder und Mitnehmerglieder. Die Zugentlastungsglieder und Mitnehmerglieder sind über die entsprechenden Kettengelenke abwechselnd aneinandergereiht, wobei die Mitnehmerglieder jeweils einen Behältermitnehmer aufweisen, und wobei die Zugentlastungsglieder jeweils ein Langloch aufweisen, in dem ein entsprechendes Kettengelenk zur gelenkigen Verbindung mit einem benachbarten Mitnehmerglied verschiebbar gelagert ist.

Vorzugsweise weist der Kniehebelmechanismus mehrere Kniehebelanordnungen mit jeweils zwei Teilungshebeln auf, wobei die beiden Teilungshebel an je einem Endabschnitt über ein Teilungshebelgelenk schwenkbar miteinander verbunden sind und entsprechend an den anderen Endabschnitten schwenkbar an der Basiskette installiert sind, vorzugsweise synergetisch an entsprechenden Kettengelenken. Auf diese Weise bestimmt die Spreizung des Kniehebelmechanismus unmittelbar die relative Verschiebung der Kettenglieder und somit die Teilung der zu transportierenden Behälter.

Vorzugsweise ist am Teilungshebelgelenk eine Teilungsrolle installiert, die auf der Kettenlaufkurve abrollt, wodurch die Form der Kettenlaufkurve die Spreizung des Kniehebelmechanismus und somit die Verschiebung der Kettenglieder relativ zueinander bestimmt. Der so aufgebaute Kniehebelmechanismus in Zusammenwirkung mit der Basiskette ermöglicht, dass die Kette im gestreckten Zustand nicht oder zumindest nicht ausschließlich mit den Teilungsrollen in Kettenlaufrichtung geführt werden muss, so dass die Kette nicht zum Verhaken oder Verkanten neigt.

Vorzugsweise umfasst die Kettenlaufkurve eine untere Laufkontur, die sich vorzugsweise geradlinig erstreckt, und eine obere Laufkontur, wobei die Transportrollen oder Gleitflächen eingerichtet sind, um an beziehungsweise auf der unteren Laufkontur abzurollen oder zu gleiten, während die Teilungsrollen eingerichtet sind, um an beziehungsweise auf der oberen Laufkontur abzurollen. Auf diese Weise fungiert die Kettenlaufkurve sowohl als generelle Führung für die Basiskette, als auch als Kurve zur Determinierung der Teilung.

Die räumlichen Bezeichnungen "oben", "unten" usw. beziehen sich auf die bestimmungsgemäße Verwendung und Einbaulage der Transportvorrichtung. In der Regel sind sie relativ zur Schwerkraftrichtung zu sehen.

Vorzugsweise weist die Transportvorrichtung ferner zumindest zwei rotierbare Umlenkräder auf, um welche die Basiskette als geschlossene Kette gelegt ist und die eingerichtet sind, um die Basiskette in Umlauf zu bringen, wodurch die Basiskette entlang des Transportwegs transportiert wird. Zumindest eines der Umlenkräder wird vorzugsweise über einen Antrieb, beispielsweise Elektromotor, angetrieben. Die Umlenkräder sind an ihrem Umfang so konturiert, dass sie mit der Basiskette zusammenwirken, vorzugsweise lokal beziehungsweise punktuell in diese eingreifen, so dass das vom Antrieb erzeugte Drehmoment auf die Basiskette übertragen wird. Die Umlenkräder sind zu diesem Zweck vorzugsweise zahnradförmig ausgebildet, wobei die Zähne der Umlenkräder in entsprechende Aussparungen der Basiskette eingreifen.

Die Basiskette aus aneinandergereihten Kettengliedern bildet einen Kettenstrang, wobei die Vorrichtung vorzugsweise zwei Kettenstränge dieser Art aufweist, die parallel zueinander und voneinander beabstandet verlaufen, wodurch die Kette weiter stabilisiert wird. Vorzugsweise sind die Transportrollen oder Gleitflächen zwischen den beiden Kettensträngen angeordnet. Der Kniehebelmechanismus ist vorzugsweise an nur einem der beiden Kettenstränge angebunden.

Die oben genannte Aufgabe wird ferner durch eine Vorrichtung zum Transportieren und Behandeln von Behältern, vorzugsweise in einer Getränkeabfüllanlage, gelöst, wobei die Vorrichtung neben der Transportvorrichtung gemäß einer der vorstehend dargelegten Ausführungsvarianten eine oder mehrere Behandlungsvorrichtungen zum Behandeln der Behälter umfasst.

Die Merkmale, technischen Wirkungen, Vorteile sowie Ausführungsbeispiele, die in Bezug auf die Transportvorrichtung beschrieben wurden, gelten analog für die Vorrichtung zum Transportieren und Behandeln der Behälter.

Vorzugsweise weist die Vorrichtung als Behandlungsvorrichtungen eine Füllvorrichtung zum Befüllen der Behälter mit einem Füllprodukt und eine Verschließvorrichtung zum Verschließen der mit dem Füllprodukt befüllten Behälter mit je einem Verschluss auf, wobei die Transportvorrichtung für den Transport der mit dem Füllprodukt befüllten Behälter von der Füllvorrichtung zur Verschließvorrichtung eingerichtet ist.

Vorzugsweise handhaben die Füllvorrichtung und die Verschließvorrichtung die Behälter in einer unterschiedlichen Teilung beziehungsweise weisen eine unterschiedliche Teilung auf. Die Transportvorrichtung ist in diesem Fall eingerichtet, um die Behälter von der Füllvorrichtung in einer ersten Teilung entgegenzunehmen, während des Transports zur Verschließvorrichtung auf eine zweite, für die Verschließvorrichtung geeignete Teilung zu bringen und an die Verschließvorrichtung zu übergeben. Die Teilung der Füllvorrichtung ist vorzugsweise kleiner als die der Verschließvorrichtung.

Zur konkreten Umsetzung dieser Teilungswandlung stellt die Kettenlaufkurve der Transportvorrichtung vorzugsweise (zumindest) drei Zonen der Kettenteilung bereit, nämlich eine erste Zone, die eingerichtet ist, um die Basiskette auf die für die Aufnahme der Behälter aus der Füllvorrichtung erforderliche Teilung zu bringen, wobei der Abstand zwischen den Kettengliedern in der ersten Zone (während des Transports in Kettenlaufrichtung) vorzugsweise verringert wird, eine zweite Zone, in der die Übergabe der Behälter von der Füllvorrichtung an die Transportvorrichtung stattfindet, und eine dritte Zone, die eingerichtet ist, um die Teilung der Behälter entsprechend für die Verschließvorrichtung anzupassen, wobei der Abstand zwischen den Kettengliedern in der dritten Zone (während des Transports in Kettenlaufrichtung) vorzugsweise vergrößert wird. Die Kettenlaufkurve hat in diesem Fall somit die Form einer Rampe mit beispielsweise zunehmender Dicke auf einen gewünschten Kettenhub in der ersten Zone, konstanter Dicke in der zweiten Zone und abnehmender Dicke in der dritten Zone, in Kettenlaufrichtung entlang des Transportwegs gesehen.

Vorzugsweise weist die Füllvorrichtung einen Rundläufer auf, der eingerichtet ist, um die Behälter während der Befüllung entlang einer gekrümmten, vorzugsweise kreisförmigen, Trajektorie zu transportieren. Alternativ oder zusätzlich weist die Verschließvorrichtung einen Rundläufer auf, der eingerichtet ist, um die Behälter während des Verschließens entlang einer gekrümmten, vorzugsweise kreisförmigen, Trajektorie zu transportieren.

Mit der Bezeichnung "Rundläufer" wird hierin allgemein eine Vorrichtung, ein Anlagenteil oder dergleichen verstanden, die/der einen oder mehrere Behälter auf einer gekrümmten, vorzugsweise kreisförmigen, Trajektorie bewegt. Im Fall einer kreisförmigen Trajektorie genügt der Transport entlang eines Kreissegments, d.h. entlang eines Teilkreises. Ein vollständiger Umlauf um einen Vollkreis ist somit nicht erforderlich. Der Rundläufer kann allein dem Transport der Behälter dienen, in diesem Fall auch als "Transportstern", "Einlaufstern" oder "Auslaufstern" bezeichnet, oder Behandlungsorgane wie etwa Füllorgane und/oder Verschließorgane zur entsprechenden Behandlung der Behälter während des Transports aufweisen. Der Rundläufer kann mittels eines Karussells, eines umlaufenden Bands oder dergleichen realisiert sein, er kann die Form eines Rads, einer Rolle, einer Scheibe, eines Sterns oder dergleichen haben und definiert durch seine Drehachse eine Axialrichtung.

Die Transportvorrichtung sowie die Vorrichtung zum Transportieren und Behandeln von Behältern sind insbesondere zur Handhabung von Dosen, umfassend leichte Dosen mit dünner Dosenwandung, geeignet. Allerdings kommen auch andere Behältertypen in Betracht, wie etwa Flaschen (Glas oder PET), Kartons und dergleichen.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: einen perspektivischen Ausschnitt einer Vorrichtung zum Transportieren von Behältern mit Teilungswandlungsfunktion gemäß einem Ausführungsbeispiel;
- Figur 2: eine Rückansicht der Transportvorrichtung gemäß Figur 1;
- Figur 3: eine Vorderansicht der Transportvorrichtung gemäß Figur 1;
- Figur 4: einen größeren Ausschnitt der Transportvorrichtung gemäß Figur 1; und
- Figur 5: schematisch eine Vorrichtung zum Transportieren und Behandeln von Behältern, insbesondere zum Befüllen und Verschließen von Behältern.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

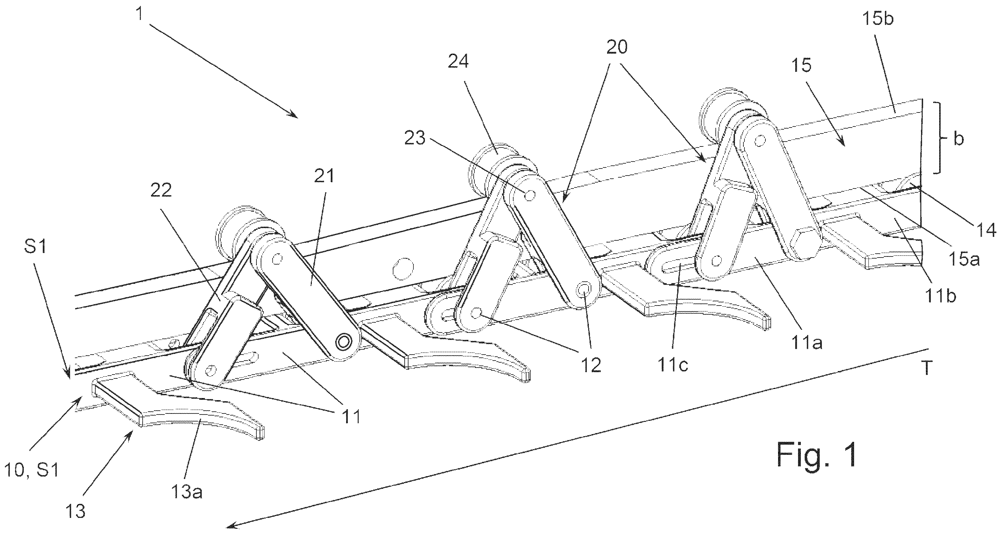

Die Figur 1 zeigt einen perspektivischen Ausschnitt einer Vorrichtung 1 zum Transportieren von Behältern (in den Figuren nicht gezeigt) entlang eines Transportwegs T, der vorzugsweise eine lineare Trajektorie ist oder zumindest abschnittsweise umfasst. Die Vorrichtung 1, hierin auch als "Transportvorrichtung" bezeichnet, ist imstande, den Abstand zwischen benachbarten Behältern während des Transports entlang des Transportwegs T zu verändern und fungiert insofern als Teilungswandler.

Die Transportvorrichtung 1 findet besonders bevorzugt Anwendung in einer Getränkeabfüllanlage, beispielsweise zum Abfüllen von Wasser (still oder karbonisiert), Bier, Wein, Saft, Softdrinks, Smoothies, Milchprodukten, Mischprodukten und dergleichen. Besonders bevorzugt ist die Transportvorrichtung 1 für den Transport von Dosen eingerichtet. Allerdings kommen auch andere Behältertypen in Betracht, wie etwa Flaschen (Glas oder PET), Kartons und dergleichen.

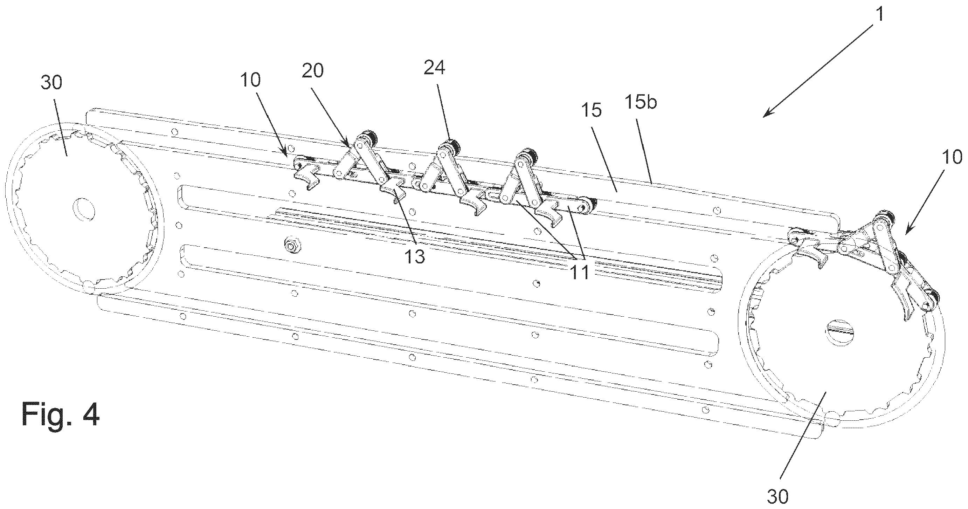

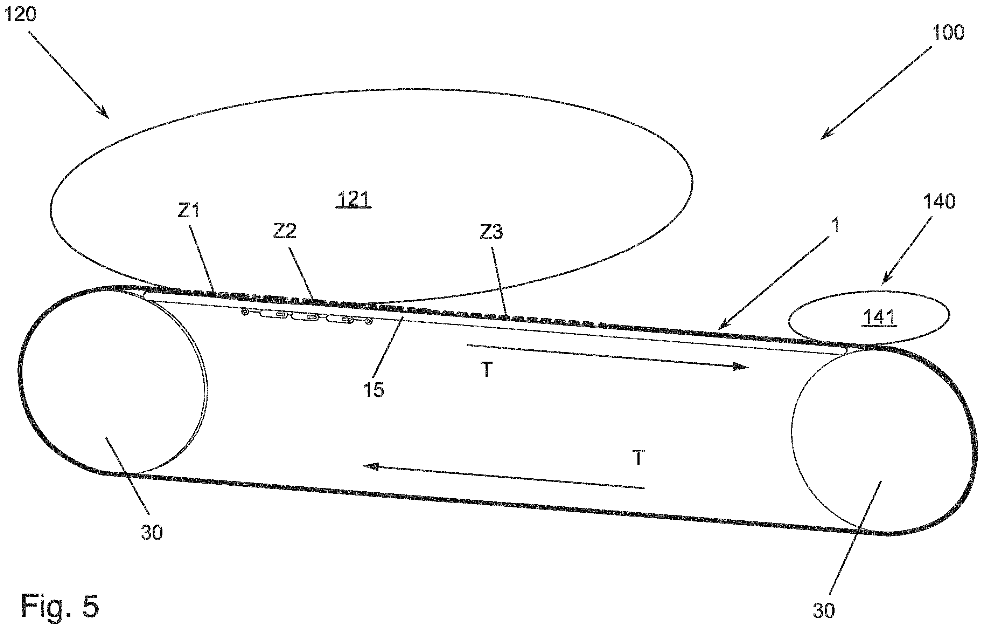

Die Transportvorrichtung 1 umfasst eine Basiskette 10, die vorzugsweise als Endloskette, d.h. geschlossene oder ringförmige Kette umlaufend ausgebildet ist (vgl. Figuren 4 und 5). Die Basiskette 10 umfasst mehrere Kettenglieder 11, die entlang des Transportwegs T aneinandergereiht und über Kettengelenke 12 entsprechend schwenkbar miteinander verknüpft sind. Ferner sind die Kettenglieder 11 zumindest teilweise in Richtung des Transportwegs T relativ zueinander verschiebbar, so dass der Abstand zwischen benachbarten Kettengelenken 12 zumindest teilweise veränderbar ist. Ein solcher Aufbau aus aneinandergereihten Kettengliedern 11 ist hierin auch als Kettenstrang S1, S2 bezeichnet.

Eine so aufgebaute Basiskette 10 dient als maschinenbaulich robuste und zuverlässige Basis für einen weiter unten beschriebenen Kniehebelmechanismus 20, der in Zusammenwirkung mit einer Kettenlaufkurve 15 die Verstellung der Kettenglieder 11 relativ zueinander determiniert.

An zumindest einigen der Kettenglieder 11 sind Behältermitnehmer 13 installiert, die eingerichtet sind, um jeweils einen Behälter in Kettenlaufrichtung, d.h. entlang des Transportwegs T mitzuführen. Die Behältermitnehmer 13 sind im einfachsten Fall von der Basiskette horizontal und im Wesentlichen senkrecht zum Transportweg vorstehende Elemente, um die Behälter in Transportrichtung zu schieben. Die Behältermitnehmer 13 können eine geeignete Form aufweisen, beispielsweise eine konkave Kontur 13a umfassen, die mit den zu transportierenden Behältern 13 korrespondiert. Alternativ können die Behältermitnehmer 13 als Behälterklammern ausgeführt sein oder eine andere geeignete Halterung beziehungsweise Aufnahme für die Behälter bilden, insofern sie einen sicheren und zuverlässigen Transport der Behälter entlang des Transportwegs T gewährleisten.

Die Basiskette 10 weist vorzugsweise Transportrollen oder Gleitelemente 14 auf, die eingerichtet sind, um die Basiskette 10 sicher und definiert entlang des Transportwegs T zu führen und reibungsarm zu transportieren. Zu diesem Zweck stehen die Transportrollen oder Gleitflächen 14 mit einer entsprechenden Kettenlaufkurve 15 in Kontakt und rollen oder gleiten an dieser ab.

Die Basiskette 10 gemäß dem Ausführungsbeispiel der Figur 1 umfasst zwei unterschiedliche Arten von Kettengliedern 11, hierin als Zugentlastungsglied 11a und Mitnehmerglied 11b bezeichnet. Die Zugentlastungsglieder 11a und Mitnehmerglieder 11b sind über die entsprechenden Kettengelenke 12 abwechselnd aneinandergereiht. Die Mitnehmerglieder 11b, die jeweils einen Behältermitnehmer 13 aufweisen, umfassen an ihren Längsenden jeweils eine Öffnung zur Aufnahme je eines Pins oder einer Achse, wodurch ein entsprechendes Kettengelenk 12 ausgebildet wird. Die Zugentlastungsglieder 11a umfassen ebenfalls an ihren Längsenden jeweils eine Öffnung zur Aufnahme je eines Pins oder einer Achse zur Verbindung mit einem entsprechenden Mitnehmerglied 11b, wobei eine der beiden Öffnungen als Langloch 11c ausgebildet ist, wodurch die über das Langloch 11c miteinander verbundenen Zugentlastungs- und Mitnehmerglieder 11a, 11b relativ zueinander verschiebbar sind, entlang der Kettenlaufrichtung beziehungsweise des Transportwegs T gesehen. Die genannten Pins oder Achsen zur Ausbildung der Kettengelenke 12 können synergetisch als Achsen für die Transportrollen 14 fungieren.

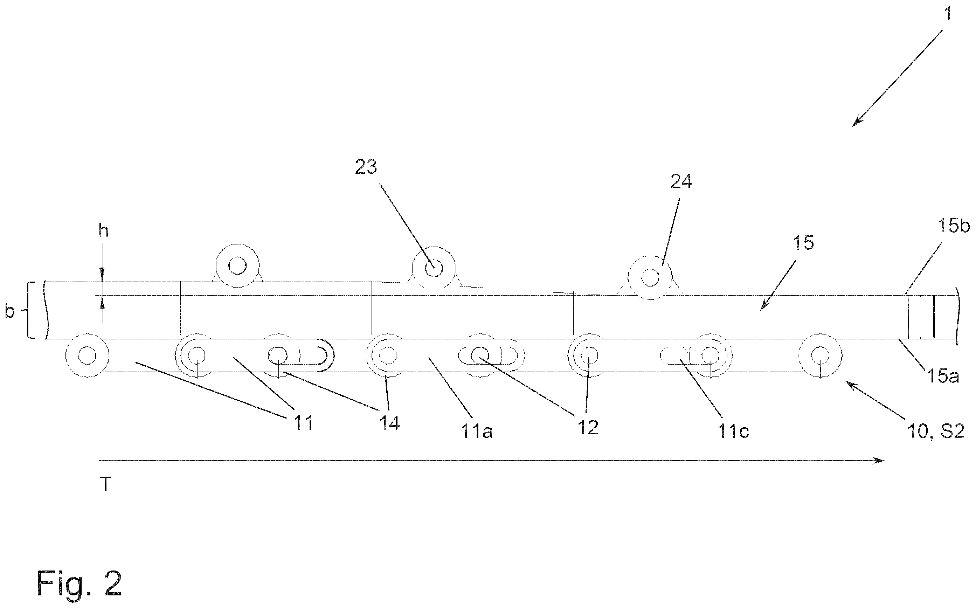

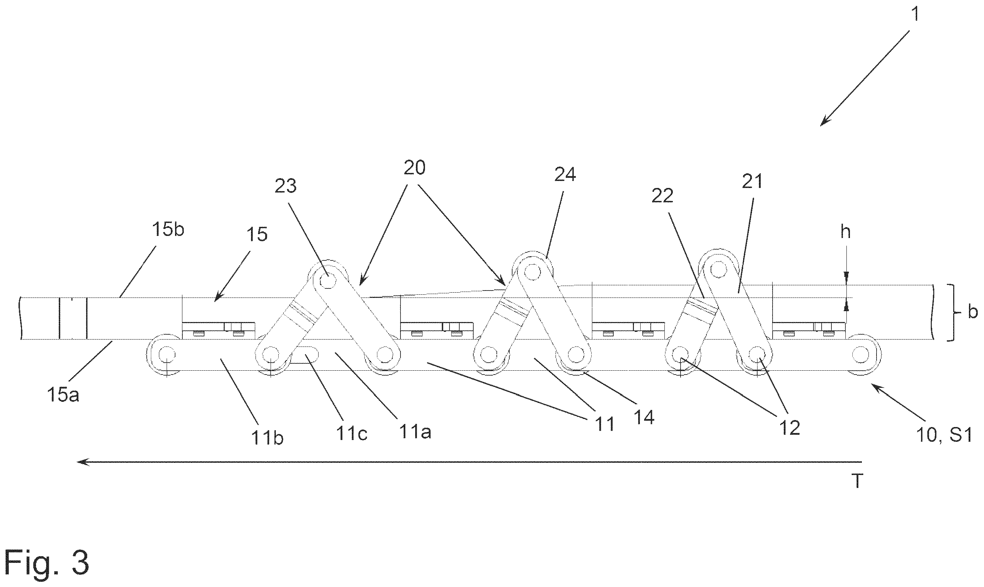

Gemäß dem Ausführungsbeispiel der Figur 1 ist der oben beschriebene Kettenstrang S1, S2 aus Zugentlastungs- und Mitnehmergliedern 11a, 11b zweimal vorgesehen, in einer parallelen Anordnung, wie es aus einem Vergleich der Kettenrückansicht gemäß Figur 2 und Kettenvorderansicht gemäß Figur 3 hervorgeht. Die beiden Kettenstränge S1, S2 verlaufen parallel zueinander in einem gewissen Abstand, wobei zwischen den Kettensträngen S1, S2 die Transportrollen oder Gleitflächen 14 angeordnet sind.

Die Verschiebung der Kettenglieder 11 relativ zueinander wird über einen Kniehebelmechanismus 20 in Zusammenwirkung mit der Kettenlaufkurve 15 determiniert. Der Kniehebelmechanismus 20 umfasst mehrere Kniehebelanordnungen mit jeweils zwei Teilungshebeln 21, 22, die an einem Endabschnitt über ein Teilungshebelgelenk 23 schwenkbar miteinander verbunden sind. An den anderen Endabschnitten sind die beiden Teilungshebel 21, 22 schwenkbar an der Basiskette 10 montiert, vorzugsweise synergetisch an den Kettengelenken 12.

Am Teilungshebelgelenk 23 ist eine Laufrolle, hierin als Teilungsrolle 24 bezeichnet, installiert. Die Teilungsrolle 24 rollt auf der Kettenlaufkurve 15 ab, wodurch die Form der Kettenlaufkurve 15 die Spreizung des Kniehebelmechanismus 20 und somit die Verschiebung der Kettenglieder 11 relativ zueinander bestimmt. Konkret umfasst die Kettenlaufkurve 15 zu diesem Zweck vorzugsweise eine sich geradlinig erstreckende untere Laufkontur 15a, auf der die Transportrollen oder Gleitflächen 14 der Basiskette 10 abrollen oder gleiten, und eine obere Laufkontur 15b, auf der die Teilungsrollen 24 des Kniehebelmechanismus 20 abrollen.

Im Ausführungsbeispiel der Figuren 1 bis 3 fungieren die Zugentlastungsglieder 11a als Zughebel für die Entlastung der Kette. Die Langlöcher 11c der Zugentlastungsglieder 11a verhindern, dass die Kette "glattgezogen" wird. In anderen Worten, die Kette stabilisiert sich durch die Basiskette 10 als umlaufende Basis selbst, d.h. die Kette muss im gestreckten Zustand nicht mit den Teilungsrollen in Kettenlaufrichtung geführt werden, so dass die Kette nicht zum Verhaken oder Verkanten neigt.

Die Spreizung des Kniehebelmechanismus 20 ist von der Breite b der Kettenlaufkurve 15 abhängig, die sich entlang des Transportwegs T verändert. Im Ausschnitt der Figuren 1 bis 3 verwirklicht die Kettenlaufkurve 15 beispielhaft eine Rampe, welche die Teilungsrollen 24 beziehungsweise die Kniehebelanordnungen von einem vertikal, um einen Kettenhub h gestreckten Zustand in einen Normalzustand b - h bringt.

Die Figur 4 zeigt einen größeren Ausschnitt der Transportvorrichtung 1, umfassend neben der Basiskette 10 (teilweise dargestellt) zwei rotierbare Umlenkräder 30, welche die Basiskette 10 als geschlossene Kette beziehungsweise Endloskette in Umlauf bringen und führen. Zumindest eines der Umlenkräder 30 wird über einen nicht dargestellten Antrieb, vorzugsweise Elektromotor, angetrieben beziehungsweise in Rotation versetzt. Die Umlenkräder 30 sind an ihrem Umfang so konturiert, dass sie mit der Basiskette 10 zusammenwirken, vorzugsweise lokal in diese eingreifen, so dass das vom Antrieb erzeugte Drehmoment auf die Basiskette 10 übertragen wird. Die Umlenkräder 30 können beispielsweise zahnradförmig ausgebildet sein, wobei die Zähne der Umlenkräder 30 in entsprechende Aussparungen der Basiskette 10 eingreifen.

Die Figur 5 zeigt schematisch eine Vorrichtung 100 zum Transportieren und Behandeln von Behältern, konkret zum Befüllen und Verschließen von Behältern, umfassend neben der Transportvorrichtung 1 eine Füllvorrichtung 120 und eine Verschließvorrichtung 140. Die Füllvorrichtung 120 und die Verschließvorrichtung 140 sind in Rundläuferbauweise ausgeführt, umfassend jeweils ein entsprechendes Behandlungskarussell.

Über einen in der Figur 5 nicht dargestellten Einlauf werden die zu befüllenden Behälter an einen Rundläufer 121 der Füllvorrichtung 120 übergeben. Der Rundläufer 121 ist um eine Drehachse rotierbar. Der Rundläufer 121 weist an seinem Umfang eine Mehrzahl von in der Figur 5 nicht gezeigten, zeitgesteuerten Füllorganen auf, die zum Befüllen der Behälter mit einem Füllprodukt, vorzugsweise einem Getränk wie Wasser (still oder karbonisiert), Softdrinks, Bier, Wein, Saft, Milchprodukten usw., eingerichtet sind.

Das Befüllen der Behälter kann bis auf ein kleines Winkelsegment , das auch als "Füllertotwinkel" bezeichnet wird, im Wesentlichen den gesamten Umfang des Rundläufers 121 beanspruchen, bevor die Behälter nach dem Befüllen an die Transportvorrichtung 1, die als Füllerauslauf und zur Übergabe der Behälter an die Verschließvorrichtung 140 dient, übergeben werden.

Die Behälter werden in einer ersten Teilung an die Transportvorrichtung 1 übergeben, wobei die Transportvorrichtung 1 neben dem Transport und der Übergabe der Behälter an die Verschließvorrichtung 140 die Aufgabe hat, die Behälter auf die für die Verschließvorrichtung 140 erforderliche Teilung zu bringen.

Die Verschließvorrichtung 140 umfasst ebenfalls einen Rundläufer 141, der an seinem Umfang eine Mehrzahl von in der Figur 5 nicht dargestellten Verschließorganen aufweist, die zum Verschließen der befüllten Behälter mit jeweils einem Verschluss, beispielsweise einem Drehverschluss, Korken oder Kronkorken, eingerichtet sind. Im Fall eines Dosenverschließers ist die Verschließvorrichtung 140 eingerichtet, entsprechend Dosendeckel auf die Dosen zu applizieren.

In der Figur 5 sind beispielhaft drei Zonen der Kettenteilung Z1, Z2, Z3 der Transportvorrichtung 1 gezeigt. In der ersten Zone Z1 wird die Basiskette 10 auf die für die Aufnahme der Behälter aus der Füllvorrichtung 120 erforderliche Teilung gebracht. Hat die Füllvorrichtung 120 eine kleinere Teilung (beispielsweise 87 mm) als die Verschließvorrichtung (beispielsweise 105 mm), so erfahren die Kettenglieder 11 in der ersten Zone Z1 eine negative Beschleunigung, d.h. der Abstand zwischen den Kettengliedern 11 verringert sich beziehungsweise die Spreizung der Kniehebelanordnungen nimmt ab. In der zweiten Zone Z2, welche der in den Figuren 2 und 3 gezeigten Rampe mit Kettenhub b entspricht, findet die Übergabe der Behälter von der Füllvorrichtung 120 an die Transportvorrichtung 1 statt. In der dritten Zone Z3 wird die Teilung der Behälter entsprechend für die Verschließvorrichtung 140 angepasst. Die Kettenglieder 11 erfahren in dem oben genannten Fall, dass die Teilung für die Verschließvorrichtung 140 erhöht wird, eine positive Beschleunigung.

Indem die Vorrichtung 1 eine Teilungsanpassung ermöglich, kann die Kompatibilität von Behandlungsvorrichtungen unterschiedlicher Teilung verbessert werden. Insbesondere können die Behandlungsvorrichtungen mit unterschiedlichen Leistungen gefahren werden. So kann die Füllervorrichtung 120 im regulären Betrieb etwa mit einer geringeren Umlaufgeschwindigkeit (beispielsweise 2,42 m/s) gefahren werden als die Verschließvorrichtung 140 (beispielsweise 2,92 m/s), ohne dass dies zu Problemen bei der Übergabe der Behälter führt.

Die Anpassung der Teilung erfolgt stufenlos und kann in Abhängigkeit der Beschaffenheit der Kettenlaufkurve 15 fein reguliert werden, so dass ein schonender Übergang der Teilung möglich ist und ein sicherer, ruhiger Behälterlauf realisiert wird. Ein etwaiges Überschwappen und eine etwaige Beschädigung der Behälter können vermieden oder zumindest deutlich reduziert werden.

Die Transportvorrichtung 1 ist durch die Bereitstellung und Beschaffenheit der Basiskette 10, die eine stabile, ruhiglaufende Basis für den Kniehebelmechanismus 20 bildet, maschinenbaulich robust. Haltbarkeit, Beständigkeit und Zuverlässigkeit sind verbessert. Dies gilt gleichermaßen für die Hygiene und Reinigungsfähigkeit, die insbesondere im Bereich der Lebensmittelverarbeitung unabdingbar sind.

Die Transportvorrichtung 1 sowie die Vorrichtung 100 sind zur Handhabung von Dosen, umfassend leichte Dosen mit dünner Dosenwandung, besonders geeignet.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Transportieren von Behältern
- 10: Basiskette
- 11: Kettenglied
- 11a: Zugentlastungsglied
- 11b: Mitnehmerglied
- 11c: Langloch
- 12: Kettengelenk
- 13: Behältermitnehmer
- 13a: Konkave Kontur
- 14: Transportrolle
- 15: Kettenlaufkurve
- 15a: Untere Laufkontur
- 15b: Obere Laufkontur
- 20: Kniehebelmechanismus
- 21: Teilungshebel
- 22: Teilungshebel
- 23: Teilungshebelgelenk
- 24: Teilungsrolle
- 30: Umlenkrad
- 100: Vorrichtung zum Transportieren und Behandeln von Behältern
- 120: Füllvorrichtung
- 121: Rundläufer
- 140: Verschießvorrichtung
- 141: Rundläufer

- S1: Kettenstrang
- S2: Kettenstrang

- T: Transportweg

- Z1: Erste Zone der Kettenteilung
- Z2: Zweite Zone der Kettenteilung
- Z3: Dritte Zone der Kettenteilung
- b: Breite der Kettenlaufkurve
- h: Kettenhub

## Patentansprüche

1. Vorrichtung (1) zum Transportieren von Behältern entlang eines Transportwegs (T), vorzugsweise in einer Getränkeabfüllanlage, wobei die Vorrichtung (1) aufweist:
eine Basiskette (10) mit mehreren Kettengliedern (11), die entlang des Transportwegs (T) aneinandergereiht und über Kettengelenke (12) entsprechend schwenkbar miteinander verbunden sind, wobei die Kettenglieder (11) zumindest teilweise in Richtung des Transportwegs (T) relativ zueinander verschiebbar sind, so dass der Abstand zwischen benachbarten Kettengelenken (12) zumindest teilweise veränderbar ist;
mehrere Behältermitnehmer (13), die an zumindest einigen der Kettenglieder (11) vorgesehen und eingerichtet sind, um jeweils einen Behälter aufzunehmen und entlang des Transportwegs (T) mitzuführen;
eine Kettenlaufkurve (15), die zur Führung der Basiskette (10) entlang des Transportwegs (T) eingerichtet ist; und
einen Kniehebelmechanismus (20), der an die Basiskette (10) angebunden und eingerichtet ist, um in Zusammenwirkung mit der Kettenlaufkurve (15) die Verschiebung der Kettenglieder (11) relativ zueinander zu bewirken.

2. Vorrichtung (1) nach Anspruch 1, **dadurch gekennzeichnet, dass** die Basiskette (10) Transportrollen oder Gleitflächen (14) aufweist, die eingerichtet sind, um an der Kettenlaufkurve (15) abzurollen oder zu gleiten und so die Basiskette (10) entlang des Transportwegs (T) zu führen.

3. Vorrichtung (1) nach Anspruch 1 oder 2, **dadurch gekennzeichnet, dass** die relative Verschiebbarkeit der Kettenglieder (11) der Basiskette (10) dadurch erreicht wird, dass die Kettenglieder (11) zumindest teilweise je ein Langloch (11c) aufweisen, in dem ein entsprechendes Kettengelenk (12) zur gelenkigen Verbindung mit einem benachbarten Kettenglied (11) verschiebbar gelagert ist.

4. Vorrichtung (1) nach Anspruch 3, **dadurch gekennzeichnet, dass** die Basiskette (10) zwei Arten von Kettengliedern (11), nämlich Zugentlastungsglieder (11a) und Mitnehmerglieder (11b), aufweist, wobei die Zugentlastungsglieder (11a) und Mitnehmerglieder (11b) über die entsprechenden Kettengelenke (12) abwechselnd aneinandergereiht sind, wobei die Mitnehmerglieder (11b) jeweils einen Behältermitnehmer (13) aufweisen, und wobei die Zugentlastungsglieder (11a) jeweils ein Langloch (11c) aufweisen, in dem ein entsprechendes Kettengelenk (12) zur gelenkigen Verbindung mit einem benachbarten Mitnehmerglied (11b) verschiebbar gelagert ist.

5. Vorrichtung (1) nach einem der vorigen Ansprüche, **dadurch gekennzeichnet, dass** der Kniehebelmechanismus (20) mehrere Kniehebelanordnungen mit jeweils zwei Teilungshebeln (21, 22) aufweist, wobei die beiden Teilungshebel (21, 22) an je einem Endabschnitt über ein Teilungshebelgelenk (23) schwenkbar miteinander verbunden sind und entsprechend an den anderen Endabschnitten schwenkbar an der Basiskette (10) installiert sind, vorzugsweise an entsprechenden Kettengelenken (12).

6. Vorrichtung (1) nach Anspruch 5, **dadurch gekennzeichnet, dass** am Teilungshebelgelenk (23) eine Teilungsrolle (24) installiert ist, die auf der Kettenlaufkurve (15) abrollt, wodurch die Form der Kettenlaufkurve (15) die Spreizung des Kniehebelmechanismus (20) und somit die Verschiebung der Kettenglieder (11) relativ zueinander bestimmt.

7. Vorrichtung (1) nach Anspruch 2 und Anspruch 6, **dadurch gekennzeichnet, dass** die Kettenlaufkurve (15) eine untere Laufkontur (15a), die sich vorzugsweise geradlinig erstreckt, und eine obere Laufkontur (15b) umfasst, wobei Transportrollen oder Gleitflächen (14) eingerichtet sind, um auf der unteren Laufkontur (15a) abzurollen, und die Teilungsrollen (24) eingerichtet sind, um auf der oberen Laufkontur (15b) abzurollen.

8. Vorrichtung (1) nach einem der vorigen Ansprüche, **dadurch gekennzeichnet, dass** diese ferner zumindest zwei rotierbare Umlenkräder (30) aufweist, um welche die Basiskette (10) als geschlossene Kette gelegt ist und die eingerichtet sind, um die Basiskette (10) in Umlauf zu bringen, wodurch die Basiskette (10) entlang des Transportwegs (T) transportiert wird, wobei die Umlenkräder (30) vorzugsweise zahnradförmig ausgebildet und eingerichtet sind, um punktuell in entsprechende Ausnehmungen der Basiskette (10) einzugreifen, so dass das von einem oder mehreren Umlenkrädern (30) bereitgestellte Drehmoment auf die Basiskette (10) übertragen wird.

9. Vorrichtung (1) nach einem der vorigen Ansprüche, **dadurch gekennzeichnet, dass** die Basiskette (10) aus aneinandergereihten Kettengliedern (11) einen Kettenstrang (S1, S2) bildet, wobei die Vorrichtung (1) zwei Kettenstränge (S1, S2) dieser Art aufweist, die parallel zueinander und voneinander beabstandet verlaufen, wobei der Kniehebelmechanismus (20) vorzugsweise an nur einem der beiden Kettenstränge (S1, S2) angebunden ist.

10. Vorrichtung (100) zum Transportieren und Behandeln von Behältern, vorzugsweise in einer Getränkeabfüllanlage, umfassend eine Vorrichtung (1) zum Transportieren von Behältern gemäß einem der vorigen Ansprüche und neben der Vorrichtung (1) zum Transportieren von Behältern gemäß einem der vorigen Ansprüche eine oder mehrere Behandlungsvorrichtungen (120, 140) zum Behandeln der Behälter.

11. Vorrichtung (100) nach Anspruch 10, **dadurch gekennzeichnet, dass** diese als Behandlungsvorrichtungen (120, 140) eine Füllvorrichtung (120) zum Befüllen der Behälter mit einem Füllprodukt und eine Verschließvorrichtung (140) zum Verschließen der mit dem Füllprodukt befüllten Behälter mit je einem Verschluss aufweist, wobei die Vorrichtung (1) zum Transportieren von Behältern für den Transport der mit dem Füllprodukt befüllten Behälter von der Füllvorrichtung (120) zur Verschließvorrichtung (140) eingerichtet ist.

12. Vorrichtung (100) nach Anspruch 11, **dadurch gekennzeichnet, dass** die Füllvorrichtung (120) und die Verschließvorrichtung (140) die Behälter in einer unterschiedlichen Teilung handhaben, wobei die Vorrichtung (1) zum Transportieren von Behältern eingerichtet ist, um die Behälter von der Füllvorrichtung (120) in einer ersten Teilung entgegenzunehmen, während des Transports zur Verschließvorrichtung (140) auf eine zweite, für die Verschließvorrichtung (140) geeignete Teilung zu bringen und an die Verschließvorrichtung (140) zu übergeben, wobei die Teilung der Füllvorrichtung (120) vorzugsweise kleiner als die der Verschließvorrichtung (140) ist.

13. Vorrichtung (100) nach Anspruch 12, **dadurch gekennzeichnet, dass** die Kettenlaufkurve (15) der Vorrichtung (1) zum Transportieren von Behältern zumindest drei Zonen der Kettenteilung (Z1, Z2, Z3) bereitstellt, nämlich eine erste Zone (Z1), die eingerichtet ist, um die Basiskette (10) auf die für die Aufnahme der Behälter aus der Füllvorrichtung (120) erforderliche Teilung zu bringen, wobei der Abstand zwischen den Kettengliedern (11) in der ersten Zone (Z1) vorzugsweise verringert wird, eine zweite Zone (Z2), in der die Übergabe der Behälter von der Füllvorrichtung (120) an die Vorrichtung (1) zum Transportieren von Behältern stattfindet, und eine dritte Zone (Z3), die eingerichtet ist, um die Teilung der Behälter entsprechend für die Verschließvorrichtung (140) anzupassen, wobei der Abstand zwischen den Kettengliedern (11) in der dritten Zone (Z3) vorzugsweise vergrößert wird.

14. Vorrichtung (100) nach einem der Ansprüche 11 bis 13, **dadurch gekennzeichnet, dass** die Füllvorrichtung (120) einen Rundläufer (121) aufweist, der eingerichtet ist, um die Behälter während der Befüllung entlang einer gekrümmten, vorzugsweise kreisförmigen, Trajektorie zu transportieren, und/oder die Verschließvorrichtung (140) einen Rundläufer (141) aufweist, der eingerichtet ist, um die Behälter während des Verschließens entlang einer gekrümmten, vorzugsweise kreisförmigen, Trajektorie zu transportieren.

15. Vorrichtung (100) nach einem der Ansprüche 10 bis 14, **dadurch gekennzeichnet, dass** diese eingerichtet ist, um als Behälter Dosen zu Transportieren und zu Behandeln.

## Claims

1. Device (1) for transporting containers along a transport path (T), preferably in a beverage filling system, wherein the device (1) has:
a base chain (10) with a plurality of chain links (11), which are lined up in a row along the transport path (T) and are connected to one another in a correspondingly pivotable manner via chain joints (12), wherein the chain links (11) are at least partly displaceable relative to one another in the direction of the transport path (T), so that the distance between adjacent chain joints (12) is at least to some extent variable;
a plurality of container carriers (13), which are provided on at least some of the chain links (11) and are configured to receive a respective container and carry it along the transport path (T);
a chain track (15) which is configured to guide the base chain (10) along the transport path (T); and
a toggle lever mechanism (20), which is attached to the base chain (10) and is configured to effect the displacement of the chain links (11) relative to one another in cooperation with the chain track (15).

2. Device (1) according to Claim 1, **characterized in that** the base chain (10) has transport rollers or sliding surfaces (14) which are configured to roll or to slide on the chain track (15) and thus to guide the base chain (10) along the transport path (T).

3. Device (1) according to Claim 1 or 2, **characterized in that** the relative displaceability of the chain links (11) of the base chain (10) is achieved **in that** the chain links (11) to some extent each have a slot (11c), in which a corresponding chain joint (12) for the articulated connection to an adjacent chain link (11) is displaceably mounted.

4. Device (1) according to Claim 3, **characterized in that** the base chain (10) has two types of chain links (11), namely strain relief links (11a) and carrier links (11b), wherein the strain relief links (11a) and carrier links (11b) are lined up alternatively in a row via the corresponding chain joints (12), the carrier links (11b) each having a container carrier (13), and the strain relief links (11a) each having a slot (11c) in which a corresponding chain joint (12) for the articulated connection to an adjacent carrier link (11b) is displaceably mounted.

5. Device (1) according to one of the preceding claims, **characterized in that** the toggle lever mechanism (20) has a plurality of toggle lever assemblies each having two spacing levers (21, 22), wherein the two spacing levers (21, 22) are each pivotably connected to one another in an end section via a spacer lever joint (23) and are correspondingly pivotably installed on the base chain (10) in the other end sections, preferably on corresponding chain joints (12).

6. Device (1) according to Claim 5, **characterized in that** a spacing roller (24) which rolls on the chain track (15) is installed on the spacing lever joint (23), as a result of which the shape of the chain track (15) determines the spreading of the toggle lever mechanism (20) and thus the displacement of the chain links (11) relative to one another.

7. Device (1) according to Claim 2 and Claim 6, **characterized in that** the chain track (15) comprises a lower running contour (15a), which preferably extends rectilinearly, and an upper running contour (15b), wherein transport rollers or sliding surfaces (14) are configured to roll on the lower running contour (15a), and the spacing rollers (24) are configured to roll on the upper running contour (15b).

8. Device (1) according to one of the preceding claims, **characterized in that** this further has at least two rotatable deflection wheels (30), around which the base chain (10) is laid as a closed chain and which are configured to cause the base chain (10) to circulate, as a result of which the base chain (10) is transported along the transport path (T), wherein the deflection wheels (30) are preferably formed in the manner of gears and configured to engage point-by-point in corresponding recesses in the base chain (10), so that the torque provided by one or more deflection wheels (30) is transmitted to the base chain (10).

9. Device (1) according to one of the preceding claims, **characterized in that** the base chain (10) made of chain links (11) lined up in a row forms a chain strand (S1, S2), wherein the device (1) has two chain strands (S1, S2) of this type, which run parallel to each other and at a distance from each other, the toggle lever mechanism (20) preferably being attached to only one of the two chain strands (S1, S2).

10. Device (100) for transporting and handling containers, preferably in a beverage filling system, comprising a device (1) for transporting containers according to one of the preceding claims and one or more handling devices (120, 140) for handling the containers in addition to the device (1) for transporting containers according to one of the preceding claims.

11. Device (100) according to Claim 10, **characterized in that** this has, as handling devices (120, 140), a filling device (120) for filling the containers with a filling product and a closing device (140) for closing each of the containers filled with the filling product with a closure, wherein the device (1) for transporting containers is configured to transport the containers filled with the filling product from the filling device (120) to the closing device (140).

12. Device (100) according to Claim 11, **characterized in that** the filling device (120) and the closing device (140) handle the containers with a different spacing, wherein the device (1) for transporting containers is configured to accept the containers from the filling device (120) with a first spacing, to move them to a second spacing suitable for the closing device (140) during the transport to the closing device (140), and to transfer them to the closing device (140), wherein the spacing of the filling device (120) is preferably smaller than that of the closing device (140).

13. Device (100) according to Claim 12, **characterized in that** the chain track (15) of the device (1) for transporting containers provides at least three zones of the chain spacing (Z1, Z2, Z3), namely a first zone (Z1) which is configured to move the base chain (10) to the spacing required for receiving the containers from the filling device (120), wherein the distance between the chain links (11) is preferably reduced in the first zone, a second zone (Z2), in which the transfer of the containers from the filling device (120) to the device (1) for transporting containers takes place, and a third zone (Z3), which is configured to adapt the spacing of the containers appropriately for the closing device (140), wherein the distance between the chain links (11) is preferably enlarged in the third zone (Z3).

14. Device (100) according to one of Claims 11 to 13, **characterized in that** the filling device (120) has a rotary-type device (121), which is configured to transport the containers along a curved, preferably circular, trajectory during the filling, and/or the closing device (140) has a rotary-type device (141), which is configured to transport the containers along a curved, preferably circular, trajectory during the closing.

15. Device (100) according to one of Claims 10 to 14, **characterized in that** this is configured to transport and to handle cans as containers.

## Revendications

1. Dispositif (1) pour le transport de récipients le long d'un trajet de transport (T), de préférence dans une installation de remplissage de boissons, le dispositif (1) présentant :
une chaîne de base (10) avec plusieurs maillons de chaîne (11) qui sont alignés les uns à côté des autres le long du trajet de transport (T) et sont reliés les uns aux autres de manière pivotante par le biais d'articulations de chaîne (12) de manière correspondante, les maillons de chaîne (11) pouvant être déplacés les uns par rapport aux autres au moins en partie dans la direction du trajet de transport (T) de sorte que la distance entre des articulations de chaîne (12) adjacentes puisse être modifiée au moins en partie ;
plusieurs dispositifs d'entraînement de récipient (13) qui sont prévus au niveau d'au moins certains des maillons de chaîne (11) et qui sont aménagés pour recevoir respectivement un récipient et l'entraîner le long du trajet de transport (T) ;
une came de déplacement de chaîne (15) qui est aménagée pour guider la chaîne de base (10) le long du trajet de transport (T) ; et
un mécanisme à genouillère (20) qui est relié à la chaîne de base (10) et qui est aménagé pour provoquer, en coopération avec la came de déplacement de chaîne (15), le déplacement des maillons de chaîne (11) les uns par rapport aux autres.

2. Dispositif (1) selon la revendication 1, **caractérisé en ce que** la chaîne de base (10) présente des rouleaux de transport ou des surfaces de glissement (14) qui sont aménagés pour rouler ou glisser au niveau de la came de déplacement de chaîne (15) et pour guider ainsi la chaîne de base (10) le long du trajet de transport (T).

3. Dispositif (1) selon la revendication 1 ou 2, **caractérisé en ce que** la possibilité de déplacement relatif des maillons de chaîne (11) de la chaîne de base (10) est obtenue par le fait que les maillons de chaîne (11) présentent respectivement au moins en partie un trou oblong (11c) dans lequel est logée de manière déplaçable une articulation de chaîne (12) correspondante pour la liaison articulée avec un maillon de chaîne (11) adjacent.

4. Dispositif (1) selon la revendication 3, **caractérisé en ce que** la chaîne de base (10) présente deux types de maillons de chaîne (11), à savoir des éléments de décharge de traction (11a) et des éléments d'entraînement (11b), les éléments de décharge de traction (11a) et les éléments d'entraînement (11b) étant alignés les uns à côté des autres en alternance par le biais des articulations de chaîne (12) correspondantes, les éléments d'entraînement (11b) présentant respectivement un dispositif d'entraînement de récipient (13), et les éléments de décharge de traction (11a) présentant respectivement un trou oblong (11c) dans lequel est logée de manière déplaçable une articulation de chaîne (12) correspondante pour la liaison articulée avec un élément d'entraînement (11b) adjacent.

5. Dispositif (1) selon l'une quelconque des revendications précédentes, **caractérisé en ce que** le mécanisme de levier à genouillère (20) présente plusieurs agencements de levier à genouillère avec respectivement deux leviers de division (21, 22), les deux leviers de division (21, 22) étant reliés l'un à l'autre de manière pivotante au niveau d'une portion d'extrémité respective par le biais d'une articulation de levier de division (23) et étant installés de manière pivotante de manière correspondante au niveau des autres portions d'extrémité au niveau de la chaîne de base (10), de préférence au niveau d'articulations de chaîne (12) correspondantes.

6. Dispositif (1) selon la revendication 5, **caractérisé en ce qu'un** rouleau de division (24) est installé au niveau de l'articulation de levier de division (23), lequel rouleau de division roule sur la came de déplacement de chaîne (15), de sorte que la forme de la came de déplacement de chaîne (15) détermine l'écartement du mécanisme de levier à genouillère (20) et ainsi le déplacement des maillons de chaîne (11) les uns par rapport aux autres.

7. Dispositif (1) selon la revendication 2 et la revendication 6, **caractérisé en ce que** la came de déplacement de chaîne (15) comprend un contour de déplacement inférieur (15a), qui s'étend de préférence de manière rectiligne, et un contour de déplacement supérieur (15b), des rouleaux de transport ou des surfaces de glissement (14) étant aménagés pour rouler sur le contour de déplacement inférieur (15a), et les rouleaux de division (24) étant aménagés pour rouler sur le contour de déplacement supérieur (15b).

8. Dispositif (1) selon l'une quelconque des revendications précédentes, **caractérisé en ce que** celui-ci présente en outre au moins deux roues de renvoi rotatives (30) autour desquelles la chaîne de base (10) est posée sous forme de chaîne fermée et qui sont aménagées pour amener la chaîne de base (10) en rotation, de sorte que la chaîne de base (10) soit transportée le long du trajet de transport (T), les roues de renvoi (30) étant réalisées de préférence sous forme de roue dentée et étant aménagées pour venir en prise ponctuellement dans des évidements correspondants de la chaîne de base (10) de sorte que le couple fourni par une ou plusieurs roues de renvoi (30) soit transmis à la chaîne de base (10).

9. Dispositif (1) selon l'une quelconque des revendications précédentes, **caractérisé en ce que** la chaîne de base (10) forme un brin de chaîne (S1, S2) à partir de maillons de chaîne (11) alignés les uns à côté des autres, le dispositif (1) présentant deux brins de chaîne (S1, S2) de ce type qui s'étendent parallèlement l'un à l'autre et à distance l'un de l'autre, le mécanisme de levier à genouillère (20) étant de préférence relié à seulement un des deux brins de chaîne (S1, S2).

10. Dispositif (100) pour le transport et le traitement de récipients, de préférence dans une installation de remplissage de boissons, comprenant un dispositif (1) pour le transport de récipients selon l'une quelconque des revendications précédentes et, outre le dispositif (1) pour le transport de récipients selon l'une quelconque des revendications précédentes, un ou plusieurs dispositifs de traitement (120, 140) pour le traitement des récipients.

11. Dispositif (100) selon la revendication 10, **caractérisé en ce que** celui-ci présente, en tant que dispositifs de traitement (120, 140), un dispositif de remplissage (120) pour le remplissage des récipients avec un produit de remplissage et un dispositif de fermeture (140) pour la fermeture des récipients remplis avec le produit de remplissage avec respectivement une fermeture, le dispositif (1) pour le transport de récipients étant conçu pour le transport des récipients remplis avec le produit de remplissage du dispositif de remplissage (120) au dispositif de fermeture (140).

12. Dispositif (100) selon la revendication 11, **caractérisé en ce que** le dispositif de remplissage (120) et le dispositif de fermeture (140) manipulent les récipients selon un pas différent, le dispositif (1) pour le transport de récipients étant conçu pour recevoir les récipients du dispositif de remplissage (120) selon un premier pas, pour les amener, pendant le transport vers le dispositif de fermeture (140), à un deuxième pas approprié pour le dispositif de fermeture (140) et pour les transférer au dispositif de fermeture (140), le pas du dispositif de remplissage (120) étant de préférence inférieur à celui du dispositif de fermeture (140).

13. Dispositif (100) selon la revendication 12, **caractérisé en ce que** la courbe de déplacement de chaîne (15) du dispositif (1) pour le transport de récipients fournit au moins trois zones du pas de chaîne (Z1, Z2, Z3), à savoir une première zone (Z1) qui est conçue pour amener la chaîne de base (10) au pas nécessaire pour la réception des récipients du dispositif de remplissage (120), la distance entre les maillons de chaîne (11) dans la première zone (Z1) étant de préférence réduite, une deuxième zone (Z2) dans laquelle a lieu le transfert des récipients du dispositif de remplissage (120) au dispositif (1) pour le transport de récipients, et une troisième zone (Z3) qui est conçue pour adapter le pas des récipients de manière appropriée pour le dispositif de fermeture (140), la distance entre les maillons de chaîne (11) dans la troisième zone (Z3) étant de préférence augmentée.

14. Dispositif (100) selon l'une quelconque des revendications 11 à 13, **caractérisé en ce que** le dispositif de remplissage (120) présente un tourniquet (121) qui est conçu pour transporter les récipients pendant le remplissage le long d'une trajectoire courbe, de préférence circulaire, et/ou le dispositif de fermeture (140) présente un tourniquet (141) qui est conçu pour transporter les récipients pendant la fermeture le long d'une trajectoire courbe, de préférence circulaire.

15. Dispositif (100) selon l'une quelconque des revendications 10 à 14, **caractérisé en ce que** celui-ci est conçu pour transporter et traiter des boîtes en tant que récipients.
